# FASCICULE DE BREVET EUROPEEN

(11) **EP 4 412 901 B1**
(45) Date de publication et mention de la délivrance du brevet: **27.08.2025**
(21) Numéro de dépôt: 22798120.6
(22) Date de dépôt: 03.10.2022
(51) Int. Cl.: B64C 9/02, B64C 9/24, B64F 5/10

(54) **ATTACHEMENT RAPIDE POUR UN MODULE DE VOLET MOBILE D'UNE AILE D'UN AERONEF**
SCHNELLBEFESTIGUNG FÜR EIN BEWEGLICHES KLAPPENMODUL EINES FLÜGELS EINES FLUGZEUGS
RAPID ATTACHMENT FOR A MOVABLE FLAP MODULE OF A WING OF AN AIRCRAFT

(30) Priorité: 07.10.2021 BE 202105784
(43) Date de publication de la demande: 14.08.2024
(73) Titulaire: Sonaca, 6041 Gosselies (BE)
(72) Inventeur: DE PLAEN, Didier, 1150 Woluwé-Saint-Pierre (BE); ASCENZO, Valerio, 6150 Anderlues (BE); GUEUNING, Dimitri, 1330 RIXENSART (BE)
(74) Mandataire: Brevalex
(86) Numéro de dépôt international: PCT/EP2022/077450
(87) Numéro de publication internationale: WO 2023/057377

(56) Documents cités:
- WO-A1-2018/211128
- FR-A1- 3 094 255
- GB-A- 2 588 658
- US-A1- 2008 256 788

## Description

### DOMAINE TECHNIQUE ET ÉTAT DE LA TECHNIQUE ANTÉRIEURE

La présente invention se rapporte au domaine des ailes d'aéronef, du type comprenant un corps central d'aile portant qui reste fixe et qui porte un ou plusieurs volets mobiles de bord d'attaque, également dénommés « slats ».

Chacune des deux ailes de la voilure est généralement équipée de volets mobiles hypersustentateurs, montés au bord d'attaque de l'aile. Les volets sont déployés pour les phases d'atterrissage et de décollage afin d'augmenter la portance à faible ou moyenne vitesse. En vol de croisière à grande vitesse, les volets mobiles sont rentrés pour limiter la résistance à l'avancement de l'aéronef.

Aujourd'hui, le montage des bords d'attaque fixe et des volets mobiles sur l'aile comprend de nombreuses opérations. Les bords d'attaque fixe et les volets mobiles sont constitués d'une multitude de pièces, comprenant par exemple des nervures, des revêtements, des systèmes électriques ainsi que des rails de guidage, des charnières et des bras pivotants, pour permettre d'imposer à la partie mobile le mouvement souhaité. Durant le montage des bords d'attaque fixe et des volets mobiles, ces différentes pièces sont individuellement intégrées à l'aile par des opérations, entre autre, de perçage et de rivetage pour constituer le bord d'attaque fixe et de boulonnage et de réglage pour monter les volets mobiles. Durant ce temps, d'autres travaux sur l'aile ne peuvent pas être effectués et la ligne d'assemblage reste bloquée. En outre, les opérations de perçage sont susceptibles de déposer des copeaux de métal dans des parties amovibles de l'aile qui courent ainsi le risque d'être endommagés durant leur mouvement.

Le document US 2008/256788 A1 divulgue un procédé d'assemblage de pièces pour former un composant d'aéronef, dans lequel une première surface d'une première pièce, par exemple un revêtement d'aile, doit être positionnée dans l'assemblage adjacente à une seconde surface d'une seconde pièce, par exemple un pied de nervure.

Ainsi, il serait avantageux de concevoir un module de bord d'attaque, comprenant le bord d'attaque fixe, le volet mobile avec ses parties amovibles, qui se montent sur l'aile sans la nécessité d'effectuer des opérations de perçage sur la ligne d'assemblage.

### EXPOSÉ DE L'INVENTION

C'est par conséquent un but de la présente invention d'offrir procédé de fabrication d'une pièce de liaison entre un caisson d'aile et un module de bord d'attaque, le procédé comprenant les étapes selon la revendication 1.

L'ensemble de la première région de référence, la deuxième région de référence et ladite position relative peut être conçu pour déterminer de manière unique une position relative entre le caisson d'aile et le module de bord d'attaque.

Il est également possible que la première région de référence comprenne un premier dispositif fixé au caisson d'aile et/ou
Que la deuxième région de référence comprenne un deuxième dispositif fixé au bord d'attaque.

Avantageusement, la pièce de liaison comprend une bague de guidage excentrique et l'étape de visant à concevoir la pièce de liaison pour fournir une connexion entre la première et la deuxième région de connexion comprend le fait d'adapter au moins une excentricité de la bague pour faire coïncider un extérieur de la bague avec une première ouverture et un intérieur de la bague avec une deuxième ouverture, la première et deuxième ouverture étant situées sur la région de connexion.

De préférence la première région de référence comprend une rangée supérieure de fixations du longeron et/ou une rangée inférieure de fixations du longeron et/ou une deuxième région de référence comprend une surface supérieure de la nervure principale.

Il est possible que la numérisation tridimensionnelle soit effectuée par un scanner 3D ou un dispositif de stéréovision.

La pièce de liaison peut être fabriquée par un procédé d'usinage mécanique ou par un procédé d'impression 3D.

L'invention a également pour objet un ensemble selon la revendication 7.

Dans ledit ensemble au moins une distance mesurée sur la première pièce peut être différente de la même distance mesurée sur la deuxième pièce, de préférence la différence étant de 3% ou plus.

L'invention a également pour objet un ensemble formé d'un premier aéronef comprenant une première aile, et d'un second aéronef équipé d'une deuxième aile,
le premier et le deuxième aéronef étant du même type,
la première aile comprenant un premier module de bord d'attaque fixé à un premier caisson de la première aile par une première pièce de liaison située à une position dans la première aile,
la deuxième aile comprenant un deuxième module de bord d'attaque fixé à un deuxième caisson de la deuxième aile par une deuxième pièce de liaison située à ladite position dans la deuxième aile,
les deux dites pièces de liaison étant chacune une bague,
les deux dites pièces de liaison étant fabriquées selon le procédé décrit précédemment,
la première pièce de liaison n'étant pas échangeable avec la deuxième pièce de liaison.

### BRÈVE DESCRIPTION DES DESSINS

La présente invention sera mieux comprise sur la base de la description qui va suivre et des dessins en annexe sur lesquels :
- la figure 1 montre un module de bord d'attaque fixe et la partie avant d'un caisson d'aile d'une aile d'un aéronef,
- la figure 2 montre le caisson d'aile comprenant une première région de connexion,
- la figure 3 montre le module de bord d'attaque comprenant une deuxième région de connexion,
- les figures 4a et 4b montrent un modèle numérique et une plaque comme pièce de liaison, non couverts par la présente invention,
- les figures 5a, 5b et 5c montrent une bague comme pièce de liaison,
- les figures 6a, 6b et 6c montrent une plaque à plusieurs niveaux comme pièce de liaison, non couverte par la présente invention,
- la figure 7 montre des régions de référence,
- la figure 8 montre des étapes d'un procédé de fabrication d'une pièce de liaison.

### EXPOSÉ DÉTAILLÉ DE MODES DE RÉALISATION PARTICULIERS

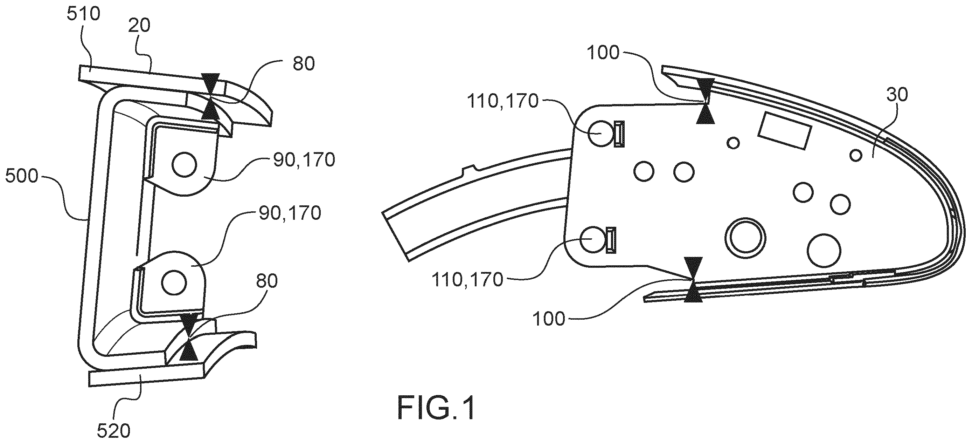

La figure 1 montre un module de bord d'attaque 30 fixe de la partie avant d'un caisson d'aile 20 d'une aile d'un aéronef.

Le caisson d'aile est délimité par un longeron de l'aile 500, une peau d'extrados 510 et une peau d'intrados 520. Le caisson d'aile comprend une première région de connexion 90, configurée pour monter le module de bord d'attaque. Dans l'exemple montré dans la figure 1, la première région de connexion comprend des œillets 170.

Le module de bord d'attaque 30 comprend, de son côté, une deuxième région de connexion 110, configurée pour permettre de fixer le module de bord d'attaque au caisson d'aile. Dans l'exemple montré il s'agit également d'un ou plusieurs œillets.

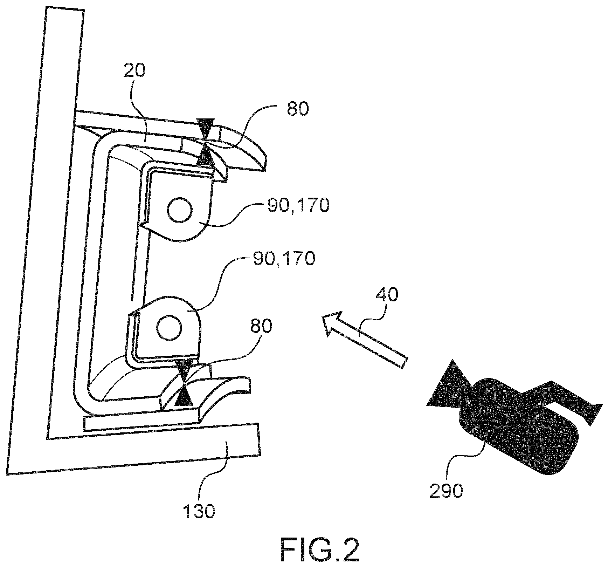

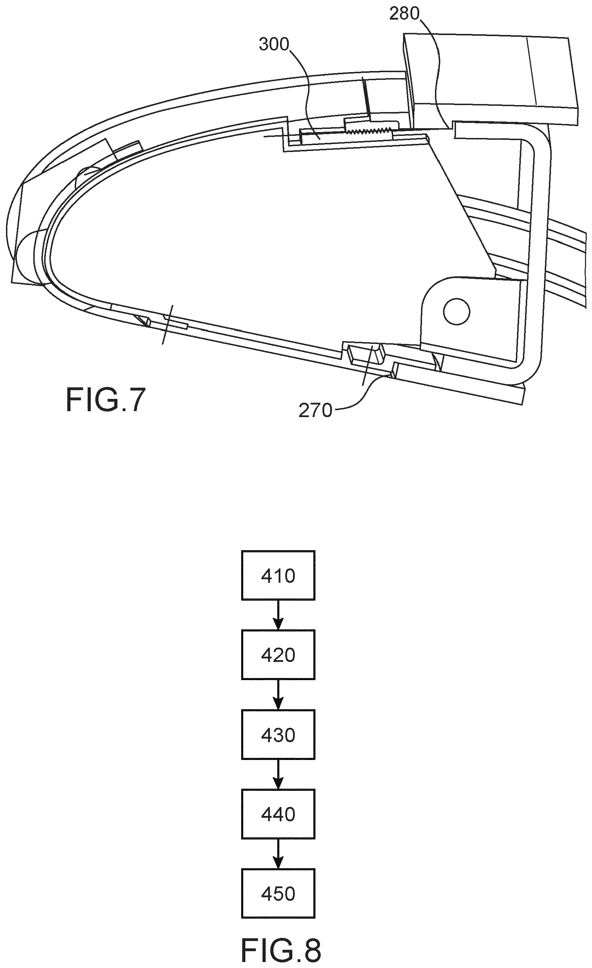

La figure 8 montre un procédé de fabrication d'une pièce de liaison entre le caisson d'aile 20 et le module de bord d'attaque 30, ladite pièce étant pourvue pour fixer le module de bord d'attaque au caisson d'aile. Le procédé sera expliqué par la suite à l'aide des figures 2 à 7.

Dans une première étape 410, une numérisation tridimensionnelle d'une première partie représentative du caisson d'aile 40 est effectuée afin d'obtenir un premier modèle numérique 50.

La figure 2 montre le caisson d'aile 20 comprenant la première région de connexion 90. Un dispositif de numérisation 290 est également montré. Il peut s'agir, par exemple, d'un scanner tridimensionnel 3D ou d'un dispositif de stéréovision. Le dispositif de numérisation est configuré pour effectuer la numérisation tridimensionnelle de la première partie représentative du caisson d'aile. Ladite partie représentative peut, par exemple, être un intérieur du caisson d'aile. Dans ce cas, le dispositif de numérisation est, par exemple, orienté pour obtenir un modèle numérique de l'intérieur du caisson d'aile. La première partie représentative comprend la première région de connexion 90 et une première région de référence 80. En conséquence, un premier modèle numérique obtenu à partir de ladite numérisation comprend la première région de connexion et la première région de référence.

La première région de référence est une partie visible dans le modèle numérique ayant une position fixe ou temporairement fixe par rapport à la première région de connexion. Par exemple, tel qu'indiqué sur la figure 2, la première région de référence 80 peut être un bord supérieur et/ou un bord inférieur du caisson d'aile. Dans ce cas, ladite position est fixe. La première région de référence peut aussi être une ligne ou un quart situé sur un cadre de transport fixé au caisson d'aile. Dans ce cas, ladite position est temporairement fixe, le temps que le caisson d'aile reste en liaison avec le cadre de transport.

Dans une deuxième étape, une numérisation tridimensionnelle d'une deuxième partie représentative du module de bord d'attaque 60 est effectuée afin d'obtenir un deuxième modèle numérique 70.

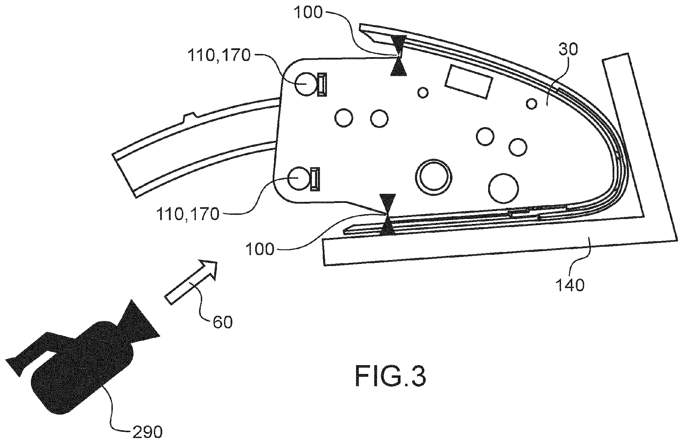

La figure 3 montre le module de bord d'attaque 30 comprenant la deuxième région de connexion 110. Le dispositif de numérisation 290 est, dans ce cas, orienté et configuré pour effectuer la numérisation tridimensionnelle de la deuxième partie représentative du module de bord d'attaque. De façon similaire à ce qui a été décrit auparavant, la deuxième partie représentative comprend la deuxième région de connexion 110 et une deuxième région de référence 100. Le deuxième modèle numérique comprend et montre ainsi la deuxième région de connexion et la deuxième région de référence.

Dans le cas montré dans la figure 3, la deuxième région de référence est un intérieur du module du bord d'attaque comprenant un bord supérieur et/ou un bord inférieur du bord d'attaque et/ou une surface de la nervure centrale. Comme décrit auparavant, la deuxième région de référence a une position fixe ou temporairement fixe par rapport à la deuxième région de connexion. Par exemple, la deuxième région de référence peut être située sur un cadre de transport 140 du module de bord d'attaque.

Dans une troisième étape 430 une position relative 120 de la première région de référence par rapport à la deuxième région de référence est définie.

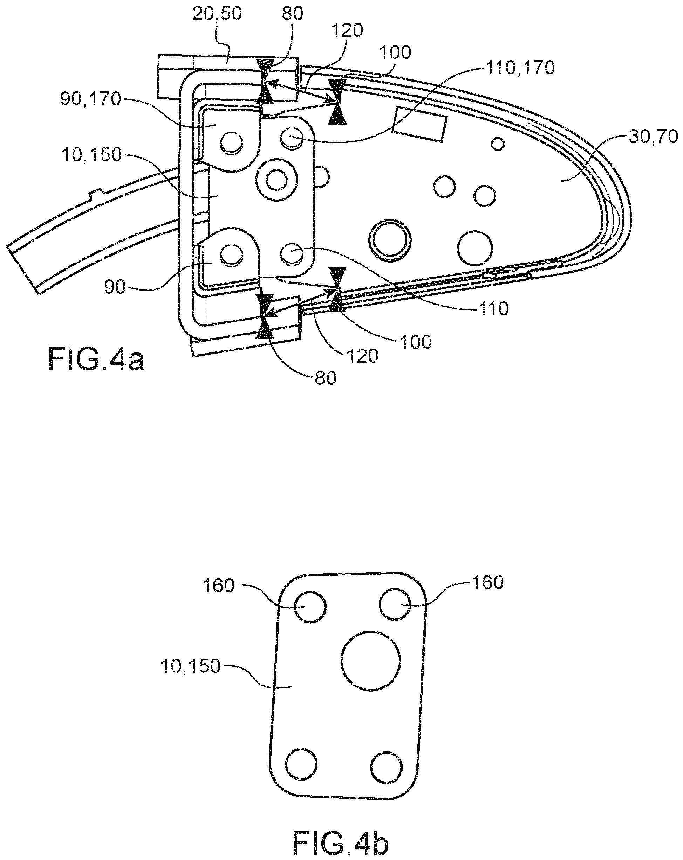

La figure 4a montre le premier modèle numérique 50 du caisson d'aile 20 et le deuxième modèle numérique 70 du module de bord d'attaque 30. Comme les modèles numériques ont été obtenues, à l'aide du dispositif de numérisation 290, à partir de pièces fabriquées, lesdites modèles montrent d'éventuels aléas de la fabrication. Autrement dit, les dimensions relatives des deux pièces fabriquées (le module de bord d'attaque et le caisson d'aile particulier qui a été numérisé) sont représentées par les modèles numériques respectives. Le premier modèle numérique comprend également la première région de référence 80, située sur le caisson d'aile, et la première région de connexion 90. Le deuxième modèle numérique 70 comprend la deuxième région de référence 100 et la deuxième région de connexion 110.

La position relative 120 de la première région de référence par rapport à la deuxième région de référence peut, par exemple, être une distance. La position relative 120 peut également être un vecteur défini dans un espace tridimensionnel. Par exemple, ledit vecteur peut être défini dans un référentiel fixé au caisson d'aile ou fixé au module de bord d'attaque. Il est également possible de prévoir une pluralité de premières régions de référence et/ou une pluralité de deuxièmes régions de référence et/ou de définir une pluralité de positions relatives associées. Par exemple, tel que montré sur la figure 4a, deux premières régions de référence et deux deuxièmes régions de référence ont été identifiées. Dans ce cas, deux positions relatives 120 sont définies.

La première et deuxième région de référence et ladite position relative sont configurées de façon à obtenir une position relative le module de bord d'attaque et le caisson d'aile telle que prévue pour la construction de l'aile de l'aéronef.

De préférence, l'ensemble de la première région de référence, la deuxième région de référence et ladite position relative est conçu pour déterminer de manière unique une position relative entre le caisson d'aile et le module de bord d'attaque.

Vue depuis le caisson d'aile ou depuis le module de bord d'attaque l'autre pièce à monter dispose de six degrés de liberté. Dans un référentiel cartésien fixé sur l'une des deux pièces (le module de bord d'attaque ou le caisson d'aile), l'autre pièce dispose de trois degrés de liberté en translation, selon une direction x, y et z. L'autre pièce dispose aussi de trois degrés de liberté en rotation, autour de l'axe x, y et z.

De préférence l'ensemble de la première région de référence, la deuxième région de référence et ladite position relative est ainsi conçu pour déterminer lesdites six degrés (trois degrés de translation et trois degrés de rotation) de liberté du module de bord d'attaque par rapport au caisson d'aile, ou vice versa.

Dans une quatrième étape 440, la pièce de liaison 10 est conçue à partir du premier et deuxième modèle numérique, les modèles placés à la position relative telle que définie dans la troisième étape, décrite ci-dessus.

La pièce de liaison est conçue pour fournir une connexion entre la première et la deuxième région de connexion. Comme la pièce de liaison est conçue pendant que le premier et deuxième modèle sont placés à ladite position relative, la pièce de liaison va connecter et maintenir le module de bord d'attaque par rapport au caisson d'aile tel que pourvu par la position relative. En conséquence, le module de bord d'attaque sera situé par rapport au caisson d'aile tel que nécessité par la construction de l'aile de l'aéronef.

La figure 4b montre une pièce de liaison 10 isolée, uniquement à titre illustratif et non couverte par l'invention. La figure 4a montre un modèle numérique de la même pièce de liaison située entre le modèle numérique du caisson d'aile et le module numérique du bord d'attaque pour fournir une connexion de façon à établir la position relative 120 entre la première et la deuxième région de connexion.

Dans une cinquième étape, la pièce de liaison est fabriquée. Par exemple, la pièce de liaison peut être fabriquée par un procédé d'usinage mécanique ou par un procédé d'impression 3D.

Dans l'exemple montré dans la figure 4a et 4b non couvert par l'invention, la pièce de liaison 10 comprend une plaque 150. Ladite plaque comprend au moins deux ouvertures de fixation 160, prévues pour établir une liaison avec la première et la deuxième région de connexion et ainsi établir la connexion entre le caisson d'aile et le module de bord d'attaque. La première et la deuxième région de connexion peuvent comprendre des œillets 170, telles que montrés sur la figure 1, 2, 3 et 4a. Les ouvertures de fixation 160 de la plaque de connexion sont ainsi conçues pour établir un lien avec les œillets de la première et deuxième région, par exemple par une visse ou un rivet.

L'étape visant à concevoir la pièce de liaison comprend le fait de situer les ouvertures sur la plaque de connexion pour pouvoir fixer la plaque entre les œillets 170 tel que la première et la deuxième région de référence sont situées à ladite position relative 120. Pour obtenir ce résultat, le premier et deuxième modèle numérique de la première et deuxième partie représentative du caisson d'aile et du module de bord d'attaque sont positionnés de façon à établir la position relative 120 entre la première et deuxième région de référence, tel que montré sur la figure 4a. Ensuite, le modèle numérique de la plaque 150 est positionné entre les œillets de la première et deuxième région de connexion. Les ouvertures de fixation 160 sont positionnées sur la plaque de façon à coïncider avec les œillets. Ensuite, la plaque comprenant les ouvertures de fixation est fabriquée, tel que montré sur la figure 4b.

La plaque fabriquée est ensuite montée entre les œillets du caisson d'aile et les œillets du module de bord d'attaque, par exemple en passant des vis par les ouvertures respectives. En conséquence du procédé de fabrication décrit ci-dessus, la première et la deuxième région de référence seront tenues à la position relative 120 choisie une fois que la plaque est montée entre les œillets des deux régions de connexion. Le module de bord d'attaque est ainsi monté au caisson d'aile tel que prévu par la construction de l'aile de l'aéronef.

De façon avantageuse, le premier et le deuxième modèle numérique peuvent être acquis avant que le module de bord d'attaque n'arrive à la ligne de fabrication de l'aile de l'aéronef. Par exemple l'aile de l'aéronef comprenant le caisson d'aile mais sans le module de bord d'attaque peut être situé sur une ligne de fabrication chez le fabricant de l'aéronef. Le premier modèle numérique du caisson d'aile peut être acquis chez le fabricant sans empêcher les autres travaux effectués sur l'aile. Le module de bord d'attaque peut être situé chez un fournisseur et le deuxième modèle numérique peut être établi chez ledit fournisseur. Ensuite, la plaque (150) peut être conçue et fabriquée. Une fois le module de bord d'attaque et la plaque livrés au fabricant, le module de bord d'attaque peut être monté directement au caisson d'aile sans l'obligation d'effectuer des opérations de perçage ou d'adaptation. Le procédé de fabrication de la pièce de liaison décrit ci-dessus assure que le module de bord d'attaque est fixé à la position souhaitée relative au caisson d'aile.

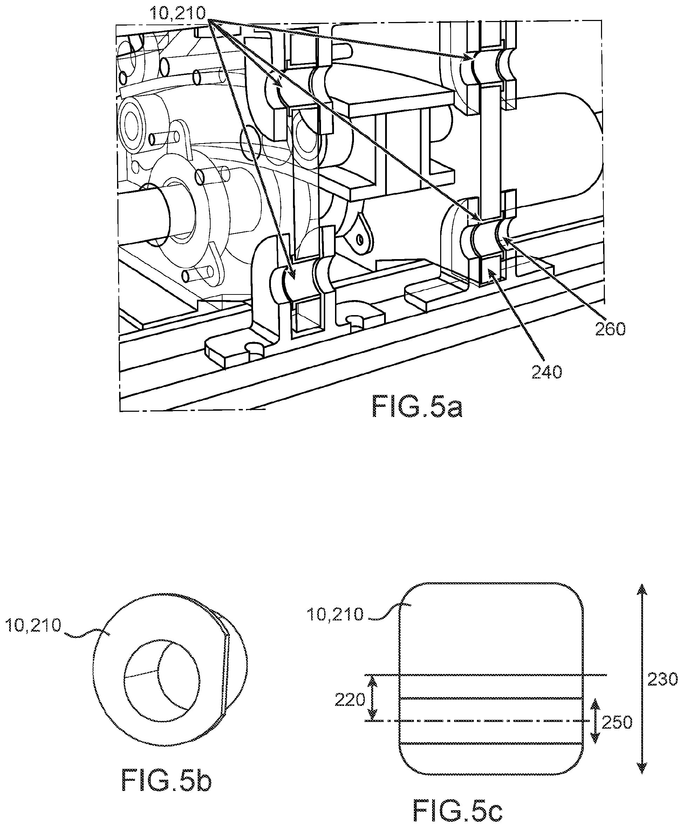

Les figures 5a, 5b et 5c montrent une pièce de liaison selon l'invention. La pièce de liaison peut comprendre une bague de guidage excentrique 210, tel que montrée sur la figure 5b. La figure 5c montre une coupe de la bague 210. La bague comprend un diamètre extérieur 230 et un diamètre intérieur 250. Un axe central du diamètre intérieur est déplacé par rapport par un axe central du diamètre extérieur par une excentricité 220 de la bague.

Dans ce cas, la première et la deuxième région de connexion comprennent une première ouverture 240 et une deuxième ouverture 260, tel que montrés sur la figure 5a, situés sur le caisson d'aile et le module de bord d'attaque. L'étape visant à concevoir la pièce de liaison pour fournir une connexion entre la première et la deuxième région de connexion comprend le fait d'adapter au moins l'excentricité 220 de la bague. Il est également possible d'adapter le diamètre extérieur et/ou le diamètre intérieur de la bague.

Pour concevoir la bague, le premier modèle numérique et le deuxième modèle numérique du caisson d'aile et du module de bord d'attaque sont situés à la position relative 120 tel que décrit auparavant. Ensuite, un modèle numérique de la bague est conçu pour faire coïncider un extérieur de la bague 230 avec la première ouverture 240 et un intérieur 250 de la bague avec la deuxième ouverture 260. Autrement dit, suite à cette adaptation et tenant le caisson d'aile et le module de bord d'attaque à ladite position relative 120, l'extérieur de la bague pourra être inséré dans la première ouverture. Une visse ou un rivet pourra, en même temps, passer par l'intérieur de la bague et la deuxième ouverture. Comme décrit ci-dessus, l'excentricité 220 de la bague est adaptée à cette fin. Il est également envisageable d'adapter le diamètre extérieur 230 et/ou le diamètre intérieur 250 de la bague. Il est entendu que la première ouverture peut être située sur le caisson d'aile et la deuxième ouverture sur le module de bord d'attaque ou vice versa. La bague est ensuite fabriquée à partir du modèle numérique de la bague.

Le module de bord d'attaque est ensuite monté au caisson d'aile en utilisant la bague fabriquée à partir du modèle numérique. Comme montré sur la figure 5a, la bague permet d'établir la connexion entre les ouvertures de la première région de connexion et les ouvertures de la deuxième région de connexion. Par exemple une vis peut être utilisée pour fixer la liaison. L'adaptation de la bague telle que décrit ci-dessus a comme conséquence que le module de bord d'attaque et le caisson d'aile qui sont à l'origine du premier et deuxième modèle numérique sont tenus à la position relative 120. Ainsi, le module du bord d'attaque est monté au caisson d'aile telle que prévu pour la fabrication de l'aile de l'aéronef.

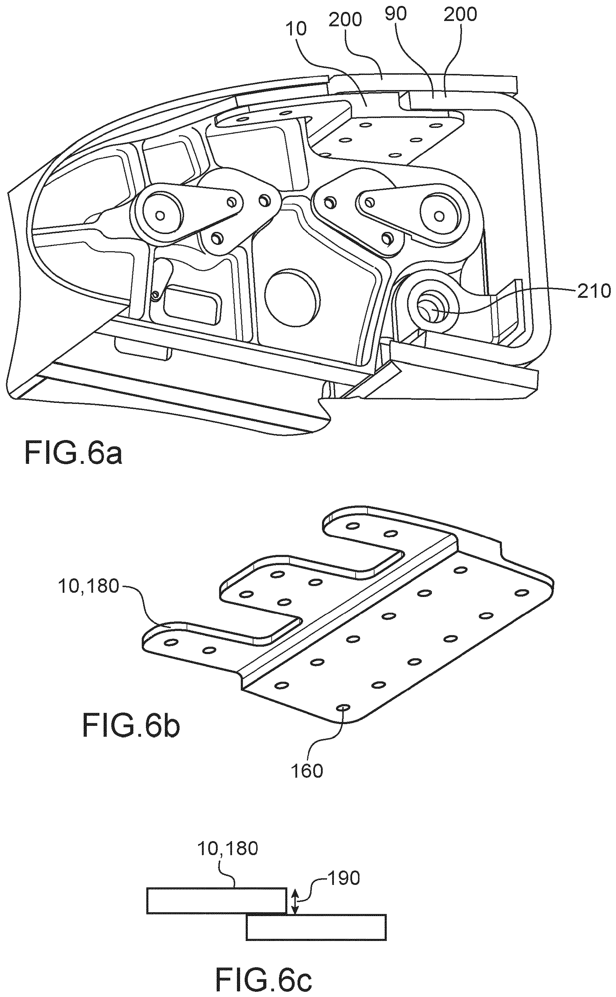

Les figures 6a, 6b et 6c montrent une autre pièce de liaison, uniquement à titre illustratif et non-couverte par l'invention. La figure 6b montre une plaque à plusieurs niveaux 180 qui est une alternative à la plaque 150 montrée dans la figure 4b. Comme pour la plaque décrite auparavant des ouvertures de fixation 160 présentes sur la plaque sont situées sur la plaque afin de fixer la plaque entre la première et la deuxième région de connexion. La position des ouvertures de fixation est établie comme décrit auparavant pour la plaque 150 montrée dans la figure 4b. Ladite plaque à plusieurs niveaux 180 est prévue pour établir une liaison entre deux surfaces 200 situées sur la première et la deuxième région de connexion, tel que montré sur la figure 6a. La plaque à plusieurs niveaux comprend une distance relative 190 des niveaux de la plaque, montrée dans la figure 6c, servant à établir le lien entre les deux surfaces 200 faisant partie du caisson d'aile et du module de bord d'attaque.

Selon la méthode présentée, le premier et le deuxième modèle numérique comprennent chacun l'ensemble d'une région de référence et d'une région de connexion. Pour concevoir la pièce de liaison, les régions de référence sont utilisées pour établir une position relative. Ensuite, la pièce de liaison est adaptée selon la région de connexion. Pour la pièce de liaison et le module de bord d'attaque, la région de référence et la région de connexion se trouvent ainsi à une position relative fixée ou temporairement fixée. Autrement dit, la première région de référence se trouve à une position fixée ou temporairement fixée par rapport à la première région de connexion. La deuxième région de référence se trouve à une position fixée ou temporairement fixée par rapport à la deuxième région de connexion.

Par exemple la première région de référence peut comprendre un premier dispositif fixé ou temporairement fixé au caisson d'aile 130. La deuxième région de référence peut comprendre un deuxième dispositif fixé au bord d'attaque 140. Les figures 2 et 3 montrent un exemple d'un dispositif temporairement fixé au caisson d'aile 140 ou un dispositif temporairement fixé au module de bord d'attaque 140. Dans les cas montrés dans les figures 2 et 3, un cadre de transport a été fixé au caisson d'aile et/ou au module de bord d'attaque. Comme le cadre de transport reste temporairement fixé, une position relative temporairement fixée est établie entre une région de référence située sur ledit cadre et une région de connexion du module de bord d'attaque ou du caisson d'aile.

La première et la deuxième région de référence peuvent aussi faire partie du caisson d'aile et du module de bord d'attaque.

Par exemple, tel que montré par la figure 7, la première région de référence peut comprendre une rangée supérieure de fixations du longeron 270. La première région de référence peut aussi comprendre une rangée inférieure de fixations du longeron 280. La deuxième région de référence peut par exemple comprendre la surface supérieure de la nervure principale 300.

Suite à la fabrication de la pièce de liaison, celle-ci est utilisée dans l'ensemble du caisson d'aile et du module de bord d'attaque. Il est aussi possible d'utiliser plusieurs pièces de liaison pour fixer le module de bord d'attaque au caisson d'aile, chacune des pièces de liaison fabriquée selon le procédé décrit précédemment. Ainsi, il est possible d'utiliser plusieurs bagues 210. On appelle deux ou plus pièces de liaison comme étant « du même » type si chacune des pièces de liaison est une bague. Plusieurs pièces du même type utilisées pour fixer le même module de bord d'attaque et caisson d'aile sont appelées un « ensemble de pièces du même type ». Le module de bord d'attaque et le caisson d'aile peuvent ainsi être fixés par un ou plusieurs ensembles de pièces du même type.

Chaque pièce de liaison individuelle a été adaptée aux dimensions et positions particulières déterminées par la première et deuxième région de connexion qui seront liées par cette pièce de liaison particulière.

En conséquence les différentes pièces formant partie d'un ensemble de pièces du même type sont toutes différentes les unes par rapport aux autres. Autrement dit, une première et une deuxième bague formant partie du même ensemble seront différentes au moins par rapport à leur excentricité. Au moins une distance mesurée sur la première pièce est différente de la même distance mesurée sur la deuxième pièce, ladite distance étant par exemple l'excentricité ou une distance d'une ouverture de fixation d'un bord de la plaque.

De cette façon, dans un ensemble d'un caisson d'aile et d'un module de bord d'attaque dans lequel le module de bord d'attaque est fixé au caisson d'aile par une première et un deuxième pièce de liaison du même type, les deux dites pièces de liaison étant une bague, la première pièce de liaison n'est pas échangeable avec la deuxième pièce de liaison.

Autrement dit, comme chaque pièce de liaison est individuellement adaptée à sa position dans le montage entre module d'attaque et caisson d'aile, une première et une deuxième pièce de liaison du même type ne peuvent pas être échangées ou changer de place l'une avec l'autre.

De la même façon, deux pièces de liaison du même type utilisées dans une première aile destinée à équiper un premier aéronef et une deuxième aile destinée à équiper un deuxième aéronef ne peuvent pas être échangés ou changer de place l'une avec l'autre. Plus précisément, la première pièce est située à une position dans la première aile. La deuxième pièce est située à la même position dans la deuxième aile. Comme le premier et le deuxième aéronef sont du même type, la même position existe dans la première et dans la deuxième aile. En conséquence, la première et la deuxième pièce de liaison sont du même type, à savoir une bague.

Autrement dit, dans un ensemble d'une première aile destinée à équiper un premier aéronef et d'une deuxième aile destinée à équiper un deuxième aéronef, le premier et le deuxième aéronef étant du même type, la première pièce de liaison n'est pas échangeable avec la deuxième pièce de liaison. Comme déjà décrit, la première aile comprend un premier module de bord d'attaque fixé à un premier caisson de la première aile par une première pièce de liaison située à une position dans la première aile et la deuxième aile comprend un deuxième module de bord d'attaque fixé à un deuxième caisson de la deuxième aile par une deuxième pièce de liaison située à ladite position dans la deuxième aile.

En particulier, les deux pièces ne sont pas échangeables parce qu'au moins une distance mesurée sur la première pièce est différente de la même distance mesurée sur la deuxième pièce.

Ladite distance mesurée peut être par exemple une excentricité (220) de bague. Dans ce cas, la différence est plus grand que 0 mm et moins grand que 1.2 mm. Selon un autre exemple la distance mesurée est une position d'ouverture sur une plaque. Dans ce cas, la différence est plus grand que 0 mm et moins grand que 0.7 mm. La distance mesurée peut être une distance entre un centre de l'ouverture et un bord de la plaque.

Il est entendu que l'ensemble précité, qui comprend la première aile et la seconde aile, peut en réalité comprendre un nombre encore plus important d'ailes répondant au même principe. Un tel ensemble se trouve par exemple sur un site de fabrication d'ailes pour aéronef.

De manière analogue, l'invention peut se décliner sous la forme d'un ensemble formé d'un premier aéronef comprenant une première aile, et d'un second aéronef équipé d'une deuxième aile,
le premier et le deuxième aéronef étant du même type,
la première aile comprenant un premier module de bord d'attaque fixé à un premier caisson de la première aile par une première pièce de liaison située à une position dans la première aile,
la deuxième aile comprenant un deuxième module de bord d'attaque fixé à un deuxième caisson de la deuxième aile par une deuxième pièce de liaison située à ladite position dans la deuxième aile,
les deux dites pièces de liaison étant chacune une bague,
les deux dites pièces de liaison étant fabriquées selon le procédé décrit précédemment,
la première pièce de liaison n'étant pas échangeable avec la deuxième pièce de liaison.

Un tel ensemble se trouve par exemple sur un site d'assemblage / de montage d'aéronefs.

## Revendications

1. Procédé de fabrication d'une pièce de liaison (10) entre un caisson d'aile (20) et un module de bord d'attaque (30), le procédé comprenant les étapes de:
- effectuer une numérisation tridimensionnelle d'une première partie représentative du caisson d'aile (40) pour obtenir un premier modèle numérique (50),
- effectuer une numérisation tridimensionnelle d'une deuxième partie représentative du module de bord d'attaque (60) afin d'obtenir un deuxième modèle numérique (70),
la première partie comprenant une première région de référence (80) et une première région de connexion (90), la deuxième partie comprenant une deuxième région de référence (100) et une deuxième région de connexion (110),
- définir une position relative (120) de la première région de référence par rapport à la deuxième région de référence,
- à partir du premier et deuxième modèle numérique, concevoir la pièce de liaison (10) pour fournir une connexion entre la première et la deuxième région de connexion tel que la première et la deuxième région de référence sont situées à ladite position relative,
- fabriquer la pièce de liaison,
- la pièce de liaison comprenant une bague (210) de guidage excentrique et
- l'étape visant à concevoir la pièce de liaison pour fournir une connexion entre la première et la deuxième région de connexion comprend le fait d'adapter au moins une excentricité (220) de la bague pour faire coïncider un extérieur de la bague (230) avec une première ouverture (240) et un intérieur (250) de la bague avec une deuxième ouverture (260), la première et deuxième ouverture étant situées sur la région de connexion.

2. Procédé selon la revendication 1 dans lequel l'ensemble de la première région de référence, la deuxième région de référence et ladite position relative est conçu pour déterminer de manière unique une position relative entre le caisson d'aile et le module de bord d'attaque.

3. Procédé selon la revendication 1 ou 2 dans lequel
la première région de référence comprend un premier dispositif fixé au caisson d'aile (130) et/ou
la deuxième région de référence comprend un deuxième dispositif fixé au bord d'attaque (140).

4. Procédé selon au moins une des revendications précédentes dans lequel
la première région de référence comprend une rangée supérieure de fixations du longeron (270) et/ou une rangée inférieure de fixations du longeron (280) et/ou
la deuxième région de référence comprend une surface supérieure de la nervure principale (300).

5. Procédé selon au moins une des revendications précédentes dans lequel
la numérisation tridimensionnelle est effectué par un scanner 3D ou un dispositif de stéréovision.

6. Procédé selon au moins une des revendications précédentes dans lequel
la pièce de liaison est fabriquée par un procédé d'usinage mécanique ou par un procédé d'impression 3D.

7. Ensemble formé d'une première aile destinée à équiper un premier aéronef et d'une deuxième aile destinée à équiper un deuxième aéronef,
le premier et le deuxième aéronef étant du même type,
la première aile comprenant un premier module de bord d'attaque fixé à un premier caisson de la première aile par une première pièce de liaison située à une position dans la première aile,
la deuxième aile comprenant un deuxième module de bord d'attaque fixé à un deuxième caisson de la deuxième aile par une deuxième pièce de liaison située à ladite position dans la deuxième aile,
les deux dites pièces de liaison étant chacune une bague,
les deux dites pièces de liaison étant fabriquées selon l'une quelconque des revendications précédentes,
la première pièce de liaison n'étant pas échangeable avec la deuxième pièce de liaison.

8. Ensemble selon la revendication 7 dans lequel
au moins une distance mesurée sur la première pièce est différente de la même distance mesurée sur la deuxième pièce,
de préférence la distance mesurée étant une excentricité (220) de bague et la différence étant plus grand que 0 mm et moins grand que 1.2 mm ou
la distance mesurée étant une position d'ouverture sur une plaque et la différence étant plus grand que 0 mm et moins grand que 0.7 mm.

9. Ensemble formé d'un premier aéronef comprenant une première aile, et d'un second aéronef équipé d'une deuxième aile,
le premier et le deuxième aéronef étant du même type,
la première aile comprenant un premier module de bord d'attaque fixé à un premier caisson de la première aile par une première pièce de liaison située à une position dans la première aile,
la deuxième aile comprenant un deuxième module de bord d'attaque fixé à un deuxième caisson de la deuxième aile par une deuxième pièce de liaison située à ladite position dans la deuxième aile,
les deux dites pièces de liaison étant chacune une bague,
les deux dites pièces de liaison étant fabriquées selon le procédé selon l'une quelconque des revendications 1 à 6,
la première pièce de liaison n'étant pas échangeable avec la deuxième pièce de liaison.

## Patentansprüche

1. Verfahren zur Herstellung eines Verbindungsstücks (10) zwischen einem Flügelkasten (20) und einem Vorderkantenmodul (30), wobei das Verfahren folgende Schritte umfasst:
- Durchführen eines dreidimensionalen Scans eines ersten repräsentativen Teils des Flügelkastens (40), um ein erstes digitales Modell (50) zu erhalten,
- Durchführen eines dreidimensionalen Scans eines zweiten repräsentativen Teils des Vorderkantenmoduls (60), um ein zweites digitales Modell (70) zu erhalten,
wobei der erste Teil einen ersten Referenzbereich (80) und einen ersten Verbindungsbereich (90) umfasst, wobei der zweite Teil einen zweiten Referenzbereich (100) und einen zweiten Verbindungsbereich (110) umfasst,
- Definieren einer relativen Position (120) des ersten Referenzbereichs in Bezug auf den zweiten Referenzbereich,
- aus dem ersten und dem zweiten digitalen Modell, Entwerfen des Verbindungsstücks (10), um eine Verbindung zwischen dem ersten und dem zweiten Verbindungsbereich bereitzustellen, so dass der erste und der zweite Referenzbereich an der relativen Position angeordnet sind,
- Anfertigen des Verbindungsstücks,
- wobei das Verbindungsstück einen exzentrischen Führungsring (210) umfasst, und
- wobei der Schritt das Entwerfen des Verbindungsstücks vorsieht, um eine Verbindung zwischen dem ersten und dem zweiten Verbindungsbereich bereitzustellen, das Anpassen mindestens einer Exzentrizität (220) des Rings umfasst, um eine Außenseite des Rings (230) mit einer ersten Öffnung (240) und eine Innenseite (250) des Rings mit einer zweiten Öffnung (260) zusammenfallen zu lassen, wobei die erste und die zweite Öffnung an dem Verbindungsbereich angeordnet sind.

2. Verfahren nach Anspruch 1, wobei die Gesamtheit aus dem ersten Referenzbereich, dem zweiten Referenzbereich und der relativen Position dazu ausgelegt ist, eine relative Position zwischen dem Flügelkasten und dem Vorderkantenmodul eindeutig zu bestimmen.

3. Verfahren nach Anspruch 1 oder 2, wobei
der erste Referenzbereich eine erste Vorrichtung umfasst, die am Flügelkasten (130) befestigt ist, und/oder
der zweite Referenzbereich eine zweite Vorrichtung umfasst, die an der Vorderkante (140) befestigt ist.

4. Verfahren nach mindestens einem der vorhergehenden Ansprüche, wobei
der erste Referenzbereich eine obere Reihe von Längsträgerbefestigungen (270) und/oder eine untere Reihe von Längsträgerbefestigungen (280) umfasst und/oder
der zweite Referenzbereich eine obere Oberfläche der Hauptrippe (300) umfasst.

5. Verfahren nach mindestens einem der vorhergehenden Ansprüche, wobei
der dreidimensionale Scan über einen 3D-Scanner oder ein Stereovision-Gerät erfolgt.

6. Verfahren nach mindestens einem der vorhergehenden Ansprüche, wobei
das Verbindungsstück in einem mechanischen Bearbeitungsverfahren oder im 3D-Druckverfahren angefertigt wird.

7. Baugruppe, die aus einem ersten Flügel zur Ausstattung eines ersten Luftfahrzeugs und einem zweiten Flügel zur Ausstattung eines zweiten Luftfahrzeugs besteht,
wobei das erste und das zweite Luftfahrzeug von dem gleichen Typ sind,
wobei der erste Flügel ein erstes Vorderkantenmodul umfasst, das an einem ersten Kasten des ersten Flügels durch ein erstes Verbindungsstück befestigt ist, das sich an einer Position in dem ersten Flügel befindet,
wobei der zweite Flügel ein zweites Vorderkantenmodul umfasst, das an einem zweiten Kasten des zweiten Flügels durch ein zweites Verbindungsstück befestigt ist, das sich an der Position in dem zweiten Flügel befindet,
wobei die beiden Verbindungsstücke jeweils ein Ring sind,
wobei die beiden Verbindungsstücke nach einem der vorhergehenden Ansprüche gefertigt sind,
wobei das erste Verbindungsstück nicht mit dem zweiten Verbindungsstück austauschbar ist.

8. Baugruppe nach Anspruch 7, wobei
mindestens ein an dem ersten Stück gemessener Abstand von demselben an dem zweiten Stück gemessenen Abstand abweicht,
wobei vorzugsweise der gemessene Abstand eine Exzentrizität (220) des Rings ist und die Differenz größer als 0 mm und kleiner als 1,2 mm ist, oder
der gemessene Abstand eine Öffnungsposition auf einer Platte ist und die Differenz größer als 0 mm und kleiner als 0,7 mm ist.

9. Baugruppe, die aus einem ersten Luftfahrzeug, umfassend einen ersten Flügel, und einem zweiten Luftfahrzeug, ausgestattet mit einem zweiten Flügel, besteht,
wobei das erste und das zweite Luftfahrzeug von dem gleichen Typ sind,
wobei der erste Flügel ein erstes Vorderkantenmodul umfasst, das an einem ersten Kasten des ersten Flügels durch ein erstes Verbindungsstück befestigt ist, das sich an einer Position in dem ersten Flügel befindet,
wobei der zweite Flügel ein zweites Vorderkantenmodul umfasst, das an einem zweiten Kasten des zweiten Flügels durch ein zweites Verbindungsstück befestigt ist, das sich an der Position in dem zweiten Flügel befindet,
wobei die beiden Verbindungsstücke jeweils ein Ring sind,
wobei die beiden Verbindungsstücke nach dem Verfahren nach einem der Ansprüche 1 bis 6 gefertigt sind,
wobei das erste Verbindungsstück nicht mit dem zweiten Verbindungsstück austauschbar ist.

## Claims

1. Method for manufacturing a connecting part (10) between a wing box (20) and a leading edge module (30), the method comprising the steps:
- performing a three-dimensional scan of a first representative part of the wing box (40) to obtain a first computer model (50),
- performing a three-dimensional scan of a second representative part of the leading edge module (60) in order to obtain a second computer model (70),
the first part comprising a first reference region (80) and a first connecting region (90), the second part comprising a second reference region (100) and a second connecting region (110),
- defining a relative position (120) of the first reference region with respect to the second reference region,
- from the first and second computer model, configuring the connecting part (10) to provide a connection between the first and the second connecting region such that the first and the second reference region are located in said relative position,
- manufacturing the connecting part,
- the connecting part comprising an eccentric guide ring (210) and
- the step of configuring the connecting part to provide a connection between the first and the second connecting region comprises adjusting at least one eccentricity (220) of the ring to coincide an exterior of the ring (230) with a first aperture (240) and an interior (250) of the ring with a second aperture (260), the first and second aperture being located in the connecting region.

2. Method according to claim 1 in which the combination of the first reference region, the second reference region and said relative position is configured to uniquely determine a relative position between the wing box and the leading edge module.

3. Method according to claim 1 or 2 in which
the first reference region comprises a first device fixed to the wing box (130) and/or
the second reference region comprises a second device fixed to the leading edge (140).

4. Method according to at least one of the preceding claims in which
the first reference region comprises a top row of spar fasteners (270) and/or a bottom row of spar fasteners (280) and/or
the second reference region comprises a top surface of the main rib (300).

5. Method according to at least one of the preceding claims in which
the three-dimensional scanning is performed by a 3D scanner or a stereovision device.

6. Method according to at least one of the preceding claims in which
the connecting part is manufactured by a mechanical machining process or by a 3D printing process.

7. Assembly formed by a first wing intended to equip a first aircraft and a second wing intended to equip a second aircraft,
the first and the second aircraft being of the same type,
the first wing comprising a first leading edge module attached to a first box of the first wing by a first connecting part located in a position in the first wing,
the second wing comprising a second leading edge module attached to a second box of the second wing by a second connecting part located in said position in the second wing,
the two said connecting parts each being a ring,
the two said connecting parts being manufactured according to any one of the preceding claims,
the first connecting part not being interchangeable with the second connecting part.

8. Assembly according to claim 7 in which
at least a distance measured on the first part is different from the same distance measured on the second part,
preferably the measured distance being a ring eccentricity (220) and the difference being greater than 0 mm and less than 1.2 mm or
the measured distance being an aperture position on a plate and the difference being greater than 0 mm and less than 0.7 mm.

9. Assembly formed by a first aircraft comprising a first wing, and a second aircraft fitted with a second wing,
the first and the second aircraft being of the same type,
the first wing comprising a first leading edge module attached to a first box of the first wing by a first connecting part located in a position in the first wing,
the second wing comprising a second leading edge module attached to a second box of the second wing by a second connecting part located in said position in the second wing,
the two said connecting parts each being a ring,
the two said connecting parts being manufactured according to the method according to any one of claims 1 to 6,
the first connecting part not being interchangeable with the second connecting part.
